# EUROPÄISCHE PATENTSCHRIFT

(11) **EP 2 316 047 B1**
(45) Veröffentlichungstag und Bekanntmachung des Hinweises auf die Patenterteilung: **07.12.2011**
(21) Anmeldenummer: 09777694.2
(22) Anmeldetag: 06.08.2009
(51) Int. Cl.: G02B 7/00, G02B 7/02

(54) **VERFAHREN ZUR HERSTELLUNG EINES OBJEKTIVS**
METHOD FOR PRODUCING A LENS
PROCÉDÉ DE FABRICATION D'UN OBJECTIF

(30) Priorität: 18.08.2008 DE 102008038245
(43) Veröffentlichungstag der Anmeldung: 04.05.2011
(73) Patentinhaber: Qioptiq Photonics GmbH & Co. KG, 37081 Göttingen (DE)
(72) Erfinder: ULRICH, Matthias, 37124 Rosdorf (DE); SONNTAG, Arnold, 37083 Göttingen (DE); THÖNISS, Thomas, 37083 Göttingen (DE)
(74) Vertreter: Wagner, Carsten
(86) Internationale Anmeldenummer: PCT/EP2009/005692
(87) Internationale Veröffentlichungsnummer: WO 2010/020347

(56) Entgegenhaltungen:
- DD-A1- 204 320
- DE-A1- 3 406 907
- DE-A1-102007 058 158

## Beschreibung

Die Erfindung betrifft ein Verfahren zur Herstellung eines Objektivs, dessen Außenfassung eine Mantelfläche aufweist, die wenigstens abschnittsweise durch eine Ebene begrenzt ist, die zur optischen Achse geneigt oder beabstandet verläuft.

Objektive haben sich in unterschiedlichen Anwendungsfeldern im privaten, gewerblichen wie auch industriellen Umfeld sowie innerhalb der Forschung und Wissenschaft etabliert. Für die einzelnen Einsatzgebiete existieren unterschiedliche Objektivarten, die sich im wesentlichen durch ihre Geometrie sowie durch die Anordnung der einzelnen optischen Elemente mit ihren spezifischen Kenngrößen unterscheiden.

Objektive bestehen im wesentlichen aus einer Anordnung von optischen Elementen, wie es Linsen, Blenden und Spiegel sein können, die zueinander entlang einer optischen Achse beabstandet sind. Die einzelnen optischen Elemente werden in der Außenfassung eines Objektives gefaßt. Die Fassung der einzelnen optischen Elemente kann direkt in der Außenfassung erfolgen, jedoch werden insbesondere bei erhöhten Anforderungen Sub- bzw. Innenfassungen verwendet, über die die optischen Elemente in dem Objektiv angeordnet werden.

Insbesondere für industrielle wie auch wissenschaftliche optische Anwendungen werden erhöhte Anforderungen an die optische Abbildungsqualität eines Objektivs gestellt. Vielfach kommen zur Untersuchung von feinen Strukturen, wie es integrierte Schaltkreise sein können, Objektive zum Einsatz, die aufgrund ihrer Abbildungseigenschaften für Mikroinspektionen besonders gut geeignet sind.

Häufig ist es bei diesen Anwendungen erforderlich, einzelne Areale auf ausgedehnten Objekten, wie Waferoberflächen, nicht orthogonal, sondern unter einem bestimmten Winkel abzubilden oder zu beleuchten. Dabei ist oftmals ein möglichst kleiner Winkel zwischen optischer Achse des Objektives und der Waferoberfläche gefordert. Die Bauform bekannter Objektive, insbesondere ihre äußeren Abmessungen und ihr Arbeitsabstand, schränkt jedoch die Neigung des Objektivs ein, so daß die gewünschten kleinen Winkel durch die konventionellen Objektive nicht erzielt werden können.

Der Erfindung liegt die Aufgabe zugrunde, ein Verfahren zur Herstellung eines Objektivs der im Oberbegriff des Anspruchs 1 genannten Art anzugeben, das den Nachteil der nach den bekannten Verfahren hergestellten Objektive beseitigt, also Objektive realisiert, die gegenüber den bekannten Objektiven einen geringeren Neigungswinkel zwischen optischer Achse und dem abzubildenden Objekt ermöglichen.

Diese Aufgabe wird durch die im Anspruch 1 angegebene Erfindung gelöst.

Der Erfindung liegt der Gedanke zugrunde, ein Verfahren anzugeben, um ein Objektiv herzustellen, das in seiner Form so bearbeitet wird, daß auch kleine Neigungswinkel zwischen optischer Achse und aufzunehmendem Objekt ermöglicht werden.

Sollen beispielsweise und insbesondere erfindungsgemäß Mikroinspektionen von Objekten in einem kleinen Neigungswinkel erfolgen, so ist durch das erfindungsgemäße Verfahren die Form des Objektivs mit seinen optischen Elementen während der Herstellung des Objektivs entsprechend dem Neigungswinkel anpaßbar.

Zur Herstellung eines Objektivs, dessen Außenfassung eine Mantelfläche aufweist, die wenigstens abschnittsweise durch eine Ebene begrenzt ist, die zur optischen Achse geneigt oder beabstandet verläuft, werden der Außenumfang wenigstens einer Linse sowie eine Innenfassung für die Linse zur Bildung einer in der Ebene liegenden Fläche bearbeitet. Daraufhin wird die Linse in die Innenfassung eingesetzt, beispielsweise eingeklebt, und anschließend wird die Außenfläche der Innenfassung mit der eingesetzten Linse feinbearbeitet zur Anpassung der Linse an eine Außenfassung des Objektivs. Anschließend wird die feinbearbeitete Innenfassung mit der eingesetzten Linse in die Außenfassung eingesetzt. Auf diese Weise wird durch das erfindungsgemäße Verfahren ein Objektiv hergestellt, das so ausgebildet ist, daß es Mikroinspektionen auch unter kleinen Neigungswinkeln ermöglicht.

Ein besonderer Vorteil der Erfindung besteht darin, daß ein Objektiv auf einfache und kostengünstige Weise so hergestellt werden kann, daß eine hohe optische Abbildungsgenauigkeit des Objektivs auch bei Mikroinspektionen möglich wird, bei denen die optische Achse unter einem kleinen Neigungswinkel zur Oberfläche des abzubildenden Objekts geneigt ist. Durch die Erfindung ist es ebenfalls möglich, beliebige Objektive so anzupassen, daß mit diesen Abbildungs- oder Beleuchtungsaufgaben unter den gleichen oben genannten Bedingungen erfolgen können. Infolgedessen ergibt sich für das erfindungsgemäße Verfahren ein breites Verwendungsspektrum. So kann das erfindungsgemäße Verfahren auch beispielsweise zur Anpassung von Mikroskopobjektiven angewendet werden.

Eine vorteilhafte Weiterbildung der Erfindung sieht vor, daß sowohl die Linse wie auch die Innenfassung sowie die Kombination aus Innenfassung und darin eingesetzter Linse durch spanende Verfahren bearbeitet werden können. Dadurch kann die Bearbeitung mit Werkzeugen mit geometrisch bestimmter Schneide wie auch mit Werkzeugen mit geometrisch unbestimmter Schneide erfolgen. Zu diesen zählen insbesondere das Fräsen, Drehen, Reiben und Sägen wie auch das Schleifen und Polieren. Demgemäß ist es ebenfalls möglich, die Herstellung des Objektivs unter Zuhilfenahme von Laserstrahlverfahren, wie beispielsweise dem Laserstrahlschneiden, zu realisieren. Die Auswahl der Bearbeitungswerkzeuge hängt im wesentlichen von der zu realisierenden Abbildungsgüte sowie auch von den Anforderungen bzw. der Abfolge der einzelnen Fertigungsschritte ab. So können beispielsweise durch Sägen optische Halbzeuge vorgefertigt werden, die gemäß der spezifischen Anforderung an das Objektiv durch ein anderes Bearbeitungsverfahren, wie z. B. das Fräsen, feinbearbeitet werden.

Gemäß dem erfindungsgemäßen Verfahren können zur Herstellung des Objektivs verschiedene Bearbeitungsverfahren verwendet werden, um die Außenfassung, die Innenfassung sowie auch die Linsen zu bearbeiten. Jedoch ist es auch möglich, aufgrund der Erfindung die Bestandteile des Objektivs im wesentlichen mit den gleichen Bearbeitungsverfahren, z. B. Schleifen, zu bearbeiten. Aufgrund dessen ergibt sich der Vorteil, daß die gleiche Vorrichtung dafür verwendet werden kann, um die jeweiligen Bestandteile des Objektives zu bearbeiten und ggf. gemäß der jeweiligen Bearbeitung lediglich das Bearbeitungswerkzeug wechseln zu müssen, wodurch der Aufwand für die Justage des Werkstücks entfällt.

Eine vorteilhafte Weiterbildung der Erfindung sieht vor, daß die Linse stoffschlüssig in der Innenfassung gehalten ist. Die stoffschlüssige Verbindung kann beispielsweise durch einen geeigneten Klebstoff erfolgen, so daß eine feste Verbindung zwischen Linse und Innenfassung erreicht werden kann. Dies ist insbesondere dann von Vorteil, wenn das Objektiv beispielsweise bei Untersuchungen häufig gewechselt werden muß, und dadurch die Gefahr gegeben ist, daß sich die Linsen aus ihrer Innenfassung lösen.

Erfindungsgemäß können jedoch auch andere stoffschlüssige Verbindungen verwendet werden. Erfindungsgemäß können zum Halten der Linse in der Innenfassung wie auch zum Halten der Innenfassung in der Außenfassung verschiedene Verbindungsverfahren verwendet werden, so daß je nach Anforderung an das Objektiv bzw. dessen Bestandteile form- wie auch kraftschlüssige Verbindungen sowie eine Kombination aus Kraft-, Form- und Stoffschluß zum Einsatz kommen.

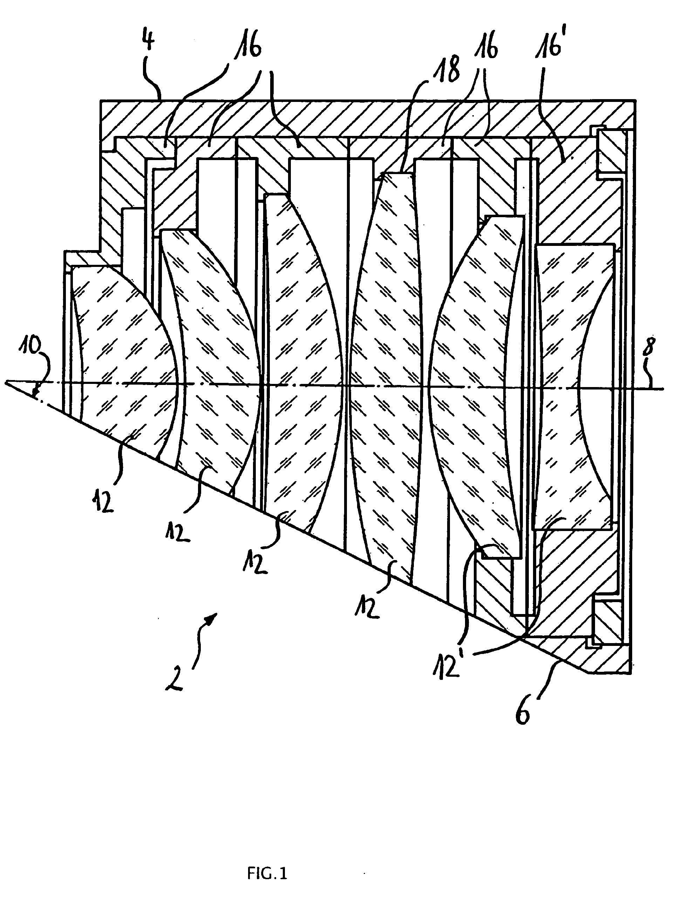

Die Erfindung wird nachfolgend anhand der beigefügten Zeichnung näher erläutert, in der ein Ausführungsbeispiel eines Objektivs dargestellt ist, das nach einem Ausführungsbeispiel eines erfindungsgemäßen Verfahrens hergestellt ist.

Die einzige Figur der Zeichnung zeigt ein Objektiv, das nach dem Ausführungsbeispiel eines erfindungsgemäßen Verfahrens herstellbar ist. Die Darstellung des Objektivs in der Figur beschränkt sich auf die wesentlichen Bestandteile und verzichtet daher auf eine detailgetreue sowie maßstäbliche Darstellung.

Das Objektiv 2 weist eine Außenfassung 4 auf, deren Mantelfläche abschnittsweise durch eine Ebene 6 begrenzt ist, die zur optischen Achse 8 unter einem Winkel 10 geneigt ist.

Darüber hinaus weist das Objektiv 2 verschiedenartige Linsen 12 auf, die wenigstens teilweise zunächst zur Bildung einer in der Ebene 6 liegenden Fläche bearbeitet sind. Neben den bearbeiteten Linsen 12 weist das Objektiv ebenfalls Linsen 12' auf, die insoweit unbearbeitet bleiben.

Ferner ist in der Zeichnung zu erkennen, daß das dargestellte Objektiv 2 Innenfassungen 16 für die Linsen 12 aufweist, die zur Bildung einer in der Ebene 6 liegenden Fläche bearbeitet wurden. Neben den bearbeiteten Innenfassungen 16 weist das dargestellte Objektiv 2 auch eine Innenfassung 16' auf, die insoweit unbearbeitet bleibt.

Gemäß des Ausführungsbeispiels eines erfindungsgemäßen Verfahrens sind die Linsen 12, die zur Bildung der in der Ebene 6 liegenden Fläche bearbeitet wurden, in die Innenfassungen 16, die ebenfalls zur Bildung der in der Ebene 6 liegenden Fläche bearbeitet wurden, mittels eines Klebstoffs 18 eingesetzt. Zur besseren Übersicht ist der Klebstoff 18 in der einzigen Figur der Zeichnung lediglich einmal mit dem Bezugszeichen 18 versehen. Zur Bildung der Ebene 6 wurden die Innenfassungen 16 mit den eingesetzten Linsen 12 durch spanende Bearbeitung mittels eines Fräsverfahrens feinbearbeitet zur Anpassung der Linsen 12 an die Außenfassung 4 des Objektivs 2. Die feinbearbeiteten Innenfassungen 16 wurden daraufhin mit den eingeklebten Linsen 12 in die Außenfassung 4 des Objektivs 2 eingesetzt.

Anhand des in der Zeichnung dargestellten Objektivs 2, das durch ein Ausführungsbeispiel eines erfindungsgemäßen Verfahrens hergestellt wurde, wird deutlich, daß das erfindungsgemäße Verfahren zur Bearbeitung verschiedenartiger Linsen sowie verschiedenartiger Innenfassungen verwendet werden kann. Neben der Bearbeitung der beschriebenen Linsen 12 und Innenfassungen 16 kann das erfindungsgemäße Verfahren ebenfalls für andere Bestandteile eines Objektivs verwendet werden, welches beispielsweise Spiegel- oder Blendenelemente sein können.

Es ist erkennbar, daß nicht in jedem Fall alle Elemente eines Objektivs gemäß dem erfindungsgemäßen Verfahren zur Bildung einer Ebene, die die Mantelfläche der Außenfassung eines Objektivs begrenzt, bearbeitet werden müssen. Zudem ist erkennbar, daß verschiedenartige optische Elemente eines Objektivs mittels des erfindungsgemäßen Verfahrens bearbeitet werden können.

## Patentansprüche

1. Verfahren zur Herstellung eines Objektivs (2), dessen Außenfassung (4) eine Mantelfläche aufweist, die wenigstens abschnittsweise durch eine Ebene (6) begrenzt ist, die zur optischen Achse (8) geneigt oder beabstandet verläuft, bei dem
- der äußere Umfang wenigstens einer Linse (12) zur Bildung einer in der Ebene (6) liegenden Fläche bearbeitet wird,
- eine Innenfassung (16) für die Linse (12) zur Bildung einer in der Ebene (6) liegenden Fläche bearbeitet wird,
- die Linse (12) in die Innenfassung (16) eingesetzt wird, und die Außenfläche der Innnenfassung (16) mit eingesetzter Linse (12) feinbearbeitet wird zur Anpassung der Linse (12) an eine Außenfassung (4) des Objektivs (2), und
- die feinbearbeitete Innenfassung (16) in die Außenfassung (4) eingesetzt wird.

2. Verfahren nach Anspruch 1, **dadurch gekennzeichnet, daß** die Innenfassungen (16) und die Linsen (12) mit einem spanenden Verfahren bearbeitet werden.

3. Verfahren nach einem der Ansprüche 1 oder 2, **dadurch gekennzeichnet, daß** die Linse (12) in der Innenfassung (16) stoffschlüssig gehalten ist, insbesondere mittels eines Klebstoffes.

## Claims

1. Method for the production of an objective (2), the outer mounting (4) of which has a casing surface, which is delimited, at least in sections, by a plane (6) which is inclined or spaced apart relative to the optical axis (8), in which
- the outer circumference of at least one lens (12) is machined for the formation of a surface lying in the plane (6);
- an inner mounting (16) for the lens (12) is machined for the formation of a surface lying in the plane (6);
- the lens (12) is inserted into the inner mounting (16), and the outer surface of the inner mounting (16) with an inserted lens (12) is finely machined for adjusting the lens (12) to an outer mounting (4) of the objective (2), and
- the finely finished inner mounting (16) is inserted into the outer mounting (4).

2. Method according to claim 1, **characterised in that** the inner mountings (16) and the lenses (12) are processed using a machining method.

3. Method according to one of claims 1 or 2, **characterised in that** the lens (12) is held in the inner mounting (16) by a material bond, in particular by means of an adhesive.

## Revendications

1. Procédé pour fabriquer un objectif (2), dont la monture extérieure (4) présente une surface d'enveloppe, qui est délimitée au moins par endroits par un plan (6), qui est incliné par rapport à l'axe optique (8) ou est disposé à distance de celui-ci, dans lequel
- le pourtour extérieur d'au moins une lentille (12) est usiné pour former une surface située dans le plan (6),
- une monture intérieure (16) pour la lentille (12) est usinée pour former une surface située dans le plan (6),
- la lentille (12) est insérée dans la monture intérieure (16), et la surface extérieure de la monture intérieure (16) avec la lentille insérée (12) est usinée finement pour l'adaptation de la lentille (12) à une monture extérieure (4) de l'objectif (2), et
- la monture intérieure (16) usinée finement est insérée dans la monture extérieure (4).

2. Procédé selon la revendication 1, **caractérisé en ce que** les montures intérieures (16) et les lentilles (12) sont usinées avec un procédé avec enlèvement de copeaux.

3. Procédé selon l'une des revendications 1 ou 2, **caractérisé en ce que** la lentille (12) est maintenue par adhésion de matière dans la monture intérieure (16), en particulier au moyen d'une colle.
